# EUROPEAN PATENT SPECIFICATION

(11) **EP 4 226 277 B1**
(45) Date of publication and mention of the grant of the patent: **26.06.2024**
(21) Application number: 20848809.8
(22) Date of filing: 06.10.2020
(51) Int. Cl.: G06K 19/06, G06K 19/077, B32B 27/00, B42D 25/30, B32B 3/26, B32B 27/08, B32B 27/30, B32B 27/36, B42D 25/351, B42D 25/45, B42D 25/455

(54) **A LIGHT GUIDE SECURITY INLAY FOR A SECURITY DOCUMENT**
LICHTLEITER-SICHERHEITSEINLAGE FÜR EIN SICHERHEITSDOKUMENT
A LIGHT GUIDE SECURITY INLAY FOR A SECURITY DOCUMENT

(43) Date of publication of application: 16.08.2023
(73) Proprietor: Linxens Holding, 78200 Mantes-la-Jolie (FR)
(72) Inventor: PHANNAN, Somchard, Phra Nakorn Si Ayutthaya, 13160 (TH); SUPATHAM, Patcharapol, Phra Nakorn Si Ayutthaya, 13160 (TH); KHUSUWAN, Khiengkrai, Phra Nakorn Si Ayutthaya, 13160 (TH); SUNGKHAPUN, Arporn, Phra Nakorn Si Ayutthaya, 13160 (TH)
(74) Representative: Grünecker Patent- und Rechtsanwälte PartG mbB
(86) International application number: PCT/IB2020/001012
(87) International publication number: WO 2022/074417

(56) References cited:
- EP-A2- 0 902 392
- DE-A1-102013 020 325
- DE-A1-102016 011 220

## Description

### TECHNICAL FIELD

The present invention relates to security documents and the manufacturing thereof.

### STATE OF THE ART

Due to recent developments in society and industry, data processing and data handling require the compliance with increasingly restrictive regulations so as to reduce the possibility of tampering with sensitive data. In many applications, sensitive data or information has to be stored in a permanent and tamper resistant manner, in particular, when data or information in non-electronic form, possibly in combination with electronically stored data, has to be stored in certain carriers. For example, credit cards, respective cards for health insurance, identification cards or the like, represent respective "carriers" having stored therein a significant amount of non-electronic information, for instance, in the form of one or more images, symbols, text and the like. Typically, this information, possibly in combination with electronically stored data, such as Radio Frequency Identification Device (RFID) labels and the like, is provided on the basis of a respective carrier, hereinafter referred to as "security document," which has to provide for high tamper resistance, so as to make difficult any intentional manipulation of the information stored in the respective carrier.

In accordance with some examples, security documents may comprise security cards, electronic pass ports and electronic data pages.

Document DE102016011220A1 discloses a security document comprising the features of the preamble of claim 1.

Security documents may be provided in the form of a booklet with several pages, at least one of which is a data page. The data page is typically formed as a stack of individual plastic sheets, such as polycarbonate layers or sheets, which are stacked and cut into desired dimensions, thereby providing the possibility of inserting respective sensitive data carriers, for instance in the form of text, images, artwork, symbols, and the like, and/or using one of the layers itself as a carrier of sensitive information. The data page may be provided in the form of material block having a highly uniform composition so as to reduce the risk of manipulating the data page in any undesired manner.

Data pages may be provided in the form of a smart card. Smart cards are the latest innovation in the family of security documents, in particular of identification cards using the ID-1 format defined in ISO/IEC standard 7810. Their characteristic feature is an integrated circuit (a RFID) embedded in the card body, which has components for transmitting, storing and processing data. The data can be transmitted by contacts on the surface of the card or by an electromagnetic field without using contacts. One of the most important advantages of smart cards is that their stored data can be protected against unauthorized access and manipulation, because the confidential data stored in the card can be processed only internally by the chip's processing unit.

Given the wide spread use of security documents and the importance of the data stored within them, numerous attempts of counterfeiting have been made. Counterfeiters can obtain the basic materials for making a security document from normal commercial channels, and, with a suitable equipment, they may duplicate any type of security card.

In view of the situation described above, it is an object of the present invention to fabricate a security document in such a manner that counterfeiting thereof is made difficult. This object is accomplished by providing the pre-form for the security document with an improved color-coded pattern which can be identified by visual inspection and which is fabricated by exploiting special materials.

### SUMMARY

The present invention is based on the idea of providing a pre-form for a security document with superior tampering resistance by introducing an additional security level. The additional security level comprises a color-coded pattern resulting from one or more inlays of special materials inserted into the card body, wherein the inlays of special materials are able to interact with a light source. In this way, the user is able to recognize the correct interaction of the special materials with the light source and hence to confirm that the card has not been counterfeited.

A pre-form for a security document represents the core of the security document and it is formed by a stack of individual plastic sheets having a standard configuration, which may be used by a manufacturer as a starting point for fabricating the final security document. After having introduced at least a part of the sensitive data into the layer stack, the respective pre-form of the security document may be heat treated so as to laminate the individual layers, thereby initiating a respective reaction between the individual surface areas, finally resulting in a monolithic structure, which may substantially not be separated in a later stage without inducing significant damage and, thus, leaving behind recognizable traces of any sort of tampering attempt.

According to an embodiment of the present invention, a pre-form for a security document as defined in claim 1 is provided.

This configuration has the advantage that, the pre-form for a security document is provided with an additional security level, since it further comprises one or more insert inlays characterized by a predefined color-coded pattern. An additional security level may be provided in this way, because one or more insert inlays comprising light guide materials are inserted into the central layer of the pre-form, hence it would be more difficult for counterfeiters to find these light guide materials, to manipulate them and to assemble them with the other layers of the pre-form for a security documents to produce fake pre-form for security documents.

Hereinafter, the "color-coded pattern" of a single insert inlay is intended as indicating not only a predefined color, but also a predefined brightness, a predefined shape and predefined dimensions. Moreover, the "color-coded pattern" of two or more insert inlays is intended as indicating not only a predefined sequence of colors, but also a predefined configuration of the insert inlays having any desired shape, and/or dimensions, and/or reciprocal position and/or predefined brightness.

Hereinafter, the color-coded pattern is defined as being horizontal, to indicate that the one or more insert inlays are disposed along a horizontal direction between a first corner and a second corner of a first side of the central layer, wherein a corner defines a place where two sides of the central layer meet.

For instance, a single insert inlay which is red, has a rectangular shape and a height of the rectangle equal to the thickness of the central layer of the pre-form defines a predefined color-coded pattern.

For instance, two insert inlays which are respectively red and blue, having a rectangular shape and a height of the rectangle equal to the thickness of the central layer of the pre-form and being spaced by a distance "d" define a predefined color-coded pattern.

It should be appreciated that the one or more insert inlays may have any color, for instance they can be red, blue, green, yellow or the like. Preferably, the customer may choose any desired colors for the one or more insert inlays to meet special requirements.

It should be appreciated that the one or more insert inlays may have any shape, for instance a circular shape, a rectangular shape or the like.

Moreover, the two or more insert inlays may be placed at any predetermined reciprocal distance, for instance they can be placed in contact with each other or they can be separated. Moreover, the one or more insert inlays can have any predetermined thickness.

The insert inlays, thanks to light guide technology, can interact with predefined input light entering the card and they can create an output color-coded pattern that can be detected by the user. The user can then detect the output color-coded pattern by visual inspection and can identify a genuine product or a counterfeited one.

It should be appreciated that the light guide materials may include translucent materials, for example translucent plastic, transparent materials or surface-coated transparent materials. In some examples, light guide materials may even comprise optical filter materials, such as light filters or polarizers.

The predefined input light may include ambient light, monochromatic light, white light, polarized light and the like, depending on the required interaction between the light guide material and the light source.

In a not limiting example, the one or more insert inlays may be made of a light guide material such as translucent plastic and the pre-form may be exposed to visible ambient light, for instance white light, so that the output color-coded pattern may have the same sequence of colors as the initial one, but with enhanced brightness.

In another not limiting example, if the one or more insert inlays are made of a light guide material such as translucent plastic and if the pre-form is exposed to a predefined monochromatic source, then the output color-coded pattern may have a different sequence of colors with respect to the initial one. For instance, if the two insert inlays are respectively blue and red and a monochromatic green source is employed, the output color-coded pattern is cyan and yellow.

In another not limiting example, if the one or more insert inlays are made of a polarizer material and if the pre-form is exposed to a non-polarized light source, then the output color-coded pattern comprises polarized light. In another not limiting example, if the one or more insert inlays are made of a light filter material transmitting a predefined wavelength and if the pre-form is exposed to a white light source, then the output color-coded pattern comprises the color corresponding to that predefined wavelength.

In the examples above, the output color-coded pattern may be thus modified by the input light interacting with the light guide material, as the output color-coded pattern can be brighter than the original one or it can have a different sequence of colors or different optical properties.

According to another embodiment of the present invention, a pre-form for a security document is provided, wherein the one or more insert inlays comprise a light guide material which interacts with visible ambient light in such a way that the brightness of the color-coded pattern is enhanced after exposure to visible ambient light.

The advantage of this configuration is that it is easy to produce and straightforward to use, since the color-coded pattern formed on the central layer of the pre-form for the security document is the same before and after exposure to visible ambient light. Nonetheless, a superior security level is provided to the pre-form, because, after exposure to visible ambient light, the user will observe an increased brightness of the colors of the insert inlays.

According to a more illustrative embodiment, the light guide material may be a translucent plastic or a transparent plastic material having any desired color, for instance red, blue and the like.

According to another embodiment of the present invention, a pre-form for a security document is provided, wherein the one or more insert inlays comprise a light guide material which interacts with a predefined input light having a predefined wavelength or a predefined polarization, in such a way that the output color-coded pattern resulting from exposure to the predefined input light is different from the color-coded pattern resulting from exposure to visible ambient light.

This configuration is advantageous because an even superior security level is added to the pre-form, since the user can detect the output color-coded pattern of the pre-form after exposure to the predefined light source and can immediately check if the output color-coded pattern corresponds to the expected modified one, thus proving that the pre-form is authentic.

In some examples, predefined light sources may comprise a light source emitting at a single predefined wavelength, for instance a monochromatic laser, or may comprise a light source having a predefined wavelength obtained by using a light filter. For instance, predefined light sources may comprise polarized light sources or unpolarized light sources.

For instance, if the two insert inlays appear respectively blue and red, when exposed to visible ambient light, and if a monochromatic green source is employed, the output color-coded pattern may be cyan and yellow. The user can then confirm if the output color-coded pattern comprising a cyan-yellow color sequence is correct and can thus prove whether the pre-form for a security document is authentic. According to another embodiment of the present invention, a pre-form for a security document is provided, wherein the light guide material comprises optical fibers.

The advantage of this configuration is that the input light can travel from one side to another side of the pre-form through the optical fibers and the loss of radiation can be minimized.

According to another embodiment of the present invention, a pre-form for a security document is provided, wherein the window is placed on the upper surface of the top layer and the window is configured so that the input light can enter the pre-form for a security document and reach the light guide material.

This configuration is particularly advantageous, because it enables an easy operation of the pre-form for a security document. In fact, it is sufficient to expose the card to an ambient light source, for instance a ceiling lamp, without needing to tilt the card, to see the output light coming out of the insert inlays.

In some examples, the pre-form for a security document may comprise a plurality of windows.

According to a more illustrative embodiment, one or more windows are provided on the upper surface of the top layer of the pre-form and they are placed so that the input light can pass through the windows and reach the light guide material without finding any obstacle along its optical path.

According to another embodiment of the present invention, a pre-form for a security document is provided, wherein the window is placed on at least one side of the central layer and the window is configured so that the input light can enter the pre-form for a security document and reach the light guide material.

The advantage of this configuration is that the pre-form for a security document can be easily operated, as it can be placed in proximity of a light source, in such a way that the input light enters from one or more sides of the card and the output light is detected on another side of the card. Moreover, since the window and the one or more insert inlays are located on the same layer, the input light does not need to pass through the separation surface between different layers, where it would be refracted, hence the radiation loss during the optical path of the input light is minimized.

In some examples, a plurality of windows may be provided on the card.

According to a more illustrative embodiment, one or more windows are provided on the one or more sides of the central layer of the pre-form and they are placed so that the input light can pass through the windows and reach the light guide material without finding any obstacle along its optical path.

According to another embodiment of the present invention, a pre-form for a security document is provided, wherein a window is placed on the opposite side of the central layer with respect to the first side.

This configuration is particularly advantageous because the pre-form can be easily operated. In fact, the user can place the pre-form in proximity of a light source, in such a way that the input light passes through one side of the pre-form and the output light exits from the opposite side. In this way, the user does not need to tilt the pre-form to see the output light and can place, for instance, the pre-form in front of himself.

According to another embodiment of the present invention, a pre-form for a security document is provided, wherein a window is placed on an adjacent side of the central layer with respect to the first side.

This configuration is particularly advantageous, because, if the input side is adjacent to the output side, the user can simultaneously see the input light and the output light and control that the operating conditions are correct.

According to another embodiment of the present invention, a pre-form for a security document is provided, wherein one or more insert inlays have a thickness equal to or smaller than the total thickness of the central layer.

This configuration is particularly advantageous since it enables to obtain insert inlays having different dimensions, therefore increasing the number of possible configurations for the color-coded patterns.

In some examples, the one or more insert inlays may have a thickness equal to half of the thickness of the central layer.

According to another embodiment of the present invention, a security document is provided, wherein the security document comprises a pre-form according to one of the embodiments described above.

This configuration has the advantage that the user can identify a genuine security document or a counterfeited security document by detecting the output color-coded pattern by visual inspection.

According to another embodiment of the present invention, a security document is provided, wherein the security document comprises a pre-form according to one of the embodiments described above and the central layer of the pre-form further comprises a chip and the security document is a smart card.

This configuration has the advantage that the user can identify a genuine smart card or a counterfeited smart card by detecting the output color-coded pattern by visual inspection.

According to another embodiment of the present invention, a method for producing a pre-form for a security document according to claim 12 is provided.

The advantage of this configuration is that an additional security level is provided to the pre-form for a security document, because the pre-form for a security document further contains a color-coded pattern, which is defined by a sequence of light guide materials that can interact with light and that can have predefined colors, shapes, dimensions and/or position. The output color-coded pattern is then modified by the predefined input light interacting with the light guide material, and the output color-coded pattern can be brighter than the original one or it can have a different sequence of colors or different optical properties.

The predefined input light may include ambient light, monochromatic light, white light, polarized light and the like, depending on the required interaction between the light guide material and the light source.

In this way, the risk of counterfeiting of the pre-form for a security document is further reduced, because the light guide materials which are inserted into the pre-form are hard to find and difficult to process (for example it is difficult to precisely connect the insert inlays made of light guide materials to the other layers of the pre-form), so it is not easy for counterfeiters to get the light guide materials and manipulate them to counterfeit the pre-forms for security documents. According to a more illustrative embodiment, the pre-form for a security document is fabricated by assembling together a bottom layer, a central layer and a top layer, and by preparing, in parallel, a light guide material portion comprising one or more insert inlays. Preferably, the top layer is provided with a window having the same shape and dimensions as the light guide material portion that has to be inserted into the pre-form. The light guide material portion is then inserted from the top into the corresponding window on the top layer, to reach the predefined position on the central layer. After insertion of the light guide material portion, the bottom layer, the central layer and the top layer are laminated together to form a pre-from for a security document. Finally, functional tests are performed to confirm that the card has been correctly assembled.

According to another more illustrative embodiment, the central layer may be provided with a window having the same shape and dimensions as the light guide material portion that has to be inserted into the pre-form. In some examples, the light guide material portion may be then inserted through the window placed on any side of the central layer, to reach the predefined position on the central layer.

According to another embodiment of the present invention, a method for producing a pre-form for a security document is provided, wherein the one or more insert inlays are formed from a corresponding cut-out portion of a light guide material.

The advantage of this configuration is that the light guide materials can be easily handled and inserted into the pre-form.

According to another embodiment of the present invention, a method is provided, wherein a single insert inlay is provided and the single insert inlay is cut so as to have the same shape as the window of the pre-form and it is inserted into the pre-form through the window.

This configuration is advantageous because the single insert inlay made of light guide material has the same shape of the input light window and can be advantageously inserted through the window without any further step to be required for insertion.

According to another embodiment of the present invention, a method is provided, wherein two or more insert inlays are provided and they are combined together to form a multi-colored light guide material sheet comprising a horizontal color-coded pattern, and the multi-colored light guide material sheet is cut so as to have a predefined shape

This configuration is advantageous because an independent unit of light guide material is obtained, by combining together two or more insert inlays to form a multi-colored light guide material sheet. This unit can be handled separately with respect to the other components of the pre-form for a security document during the assembly process.

According to another embodiment of the present invention, a method for producing pre-form for a security document is provided, wherein the multi-colored light guide material sheet is cut so as to have the same shape as the window and is inserted into the pre-form through the window.

This configuration is advantageous because the independent unit of multi-colored light guide materials has the same shape of the input light window and can be advantageously inserted through that window without any further step to be required for insertion. Preferably, the multi-colored guide material sheet is cut by exploiting punching tools.

According to another embodiment of the present invention, a method for producing a pre-form for a security document is provided, wherein the multi-colored light guide material sheet is formed by heat lamination.

This configuration is advantageous because the materials are laminated together to form an independent light guide material unit.

According to another embodiment of the present invention, a method for producing a pre-form for a security document is provided, wherein the single insert inlay and/or the multi-colored light guide material sheet are cut so as to have a thickness equal to or smaller than the thickness of the central layer.

This configuration is particularly advantageous since it enables to obtain one or more insert inlays having different dimensions, therefore increasing the number of possible configurations for the color-coded patterns.

According to another embodiment of the present invention, a method for operating a security document comprising a pre-form according to any embodiment described above is provided, wherein the method comprises the following steps:
a) exposing the security document to a light source so that the window receives the predefined input light;
b) detecting the resulting color-coded pattern; and
c) comparing the resulting color-coded pattern with a reference color-coded pattern to prove authenticity of the security document.

The advantage of this embodiment is that it is possible to identify, by visual inspection, a security document which has been counterfeited. In fact, it is sufficient to expose the security document to a light source so that the window receives the input light, to detect the resulting color-coded pattern and to compare it with a known reference color-coded pattern.

For example, if the resulting color-coded pattern, after exposure to an ambient light source, for instance white light, does not show superior brightness with respect to the initial one, the user can immediately recognize that the security document does not contain the required light guide materials and that it is not genuine.

For example, if the resulting color-coded pattern, after exposure to a monochromatic light source having a predefined wavelength, does not show an output color-coded pattern different from the initial one but having a predefined, known sequence, the user can immediately recognize that the security document does not contain the required light guide material and that it is not genuine.

According to another embodiment of the present invention, a method for operating a security document comprising a pre-form according to any embodiment described above is provided, wherein the reference color-coded pattern may have the same sequence of colors as the color-coded pattern and it may have superior brightness.

This configuration is advantageous because it is sufficient to expose the pre-form for a security document to ambient light to detect the color-coded pattern on a side of the pre-form. The resulting color-coded pattern is expected to be the same as the original color-coded pattern but to have enhanced brightness. The resulting color-coded pattern may be compared with the original color-coded pattern and, if it corresponds to what is expected by the users, the quality of the card is proven and counterfeiting actions can be excluded.

According to another embodiment of the present invention, a method for operating a security document is provided, wherein the reference color-coded pattern has a predefined sequence of colors, which may be different from the sequence of colors of the color-coded pattern.

This configuration is advantageous because the pre-form for a security document is first exposed to a predefined light source, for example, a light source having a predefined wavelength, then the corresponding color-coded pattern is detected. The resulting color-coded pattern is compared with the original color-coded pattern and, if it corresponds to what is expected by the user, the quality of the card is proven and counterfeiting can be excluded.

In some examples, the security document may be exposed to a non-polarized light source and the one or more insert inlays may comprise polarizer materials. If the resulting color-coded pattern comprises polarized light, the user may recognize that the security document actually includes one or more polarizer insert inlays and may recognize that the security document is genuine.

In some other examples, the security document may be exposed to a white light source and the one or more insert inlays may comprise light filter materials, transmitting a predefined wavelength. If the resulting color-coded pattern comprises the color corresponding to the predefined wavelength, the user may recognize that the security document actually includes one or more insert inlays comprising light filters and may recognize that the security document is genuine

### FIGURES

The present invention will be described with reference to the attached figures in which the same reference numerals and/or signs indicate the same part and/or similar and/or corresponding parts of the machine. In the figures:
Figure 1 schematically illustrates a top view of an example of a smart card according to prior art.
Figure 2 schematically illustrates a top view of a pre-form for a security document according to an embodiment of the present invention.
Figures 3a, 3b, 3c and 3d schematically illustrate examples of pre-forms for a security documents according to different embodiments of the present invention.
Figure 4 schematically illustrates the process of forming a multi-colored light guide material sheet having a predefined shape, according to an embodiment of the present invention.
Figure 5 schematically illustrates the process of assembling a pre-form for a security document according to a more illustrative embodiment of the present invention.

### DETAILED DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

For simplicity, identical or corresponding components are indicated in the figures with the same reference numbers.

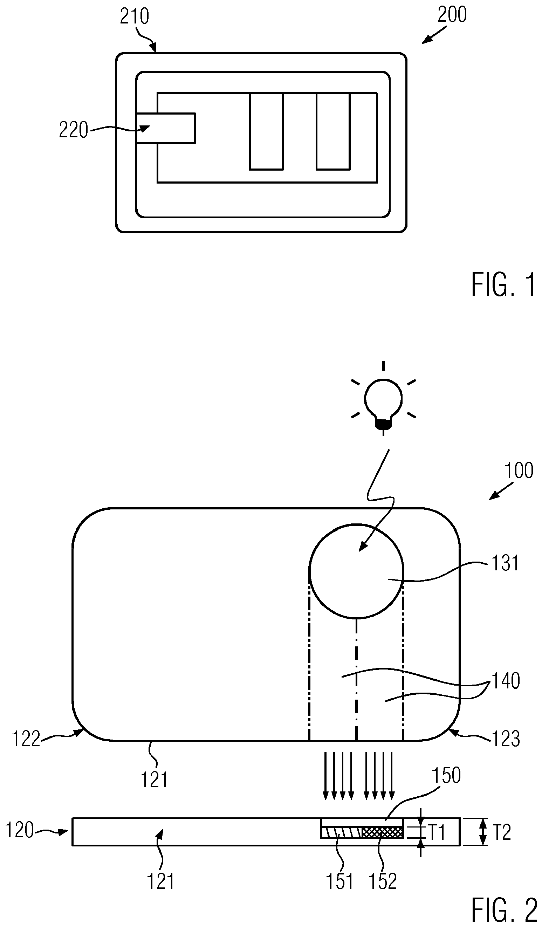

Fig. 1 schematically illustrates a top view of a smart card 200 according to prior art. The smart card 200 comprises a card body 210, a chip 220 and an interconnection substrate for the chip and the card body. The interconnection substrate works as a support for the chip and it comprises a conductor that provides communication between the chip and the external environment. The card body is preferably made by polyvinyl chloride (PVC) or polycarbonate.

Fig. 2 schematically illustrates a top view of a pre-form for a security document 100 according to an illustrative embodiment of the present invention. In particular, Fig. 2 shows the pre-form for a security document 100 when exposed to a light source.

The pre-form 100 comprises at least a bottom layer, a central layer and a top layer. The central layer 120 may comprise two insert inlays 151 and 152, disposed between a first corner 122 and a second corner 123 of the first side 121 of the central layer 120, so as to form a horizontal color-coded pattern 150. The horizontal color-coded pattern 150 does not only depend on the sequence of colors of the two insert inlays 151 and 152, but it also depends on their shape (for example rectangular or circular), dimensions (for example thickness) and reciprocal position (for example distance between the insert inlays 151 and 152). The number of insert inlays is not limited to two, but it may be instead one, three, four or more.

It should be appreciated that any color-coded pattern can be created on the output surface of the central layer of the pre-form 100, and hence of the security document, depending on the specific needs of the customer.

The insert inlays 151 and 152 of Fig. 2 have a thickness T1, which is smaller than the total thickness T2 of the central layer 120 of the card. However, it should be appreciated that the thickness T1 of the insert inlays 151 and 152 may also be equal to the thickness T2 of the central layer 120 of the card.

The two insert inlays 151 and 152 comprise a light guide material 140 that can interact with the input light coming from a light source, for example a visible ambient light source or a light source with a predefined wavelength. The light guide material may comprise for instance a translucent plastic material, a transparent plastic material or a surface-coated plastic material.

The interaction between the light guide material 140 and the light source is possible because a window is placed on the upper surface of the top layer of the pre-form 100. Therefore, light can enter into the pre-form through the window 131, then reach the light guide material 140 without finding any obstacle and exit through the insert inlays 151 and 152.

It should be appreciated, however, that a pre-form comprising a plurality of windows 131 is also possible.

The light guide material is configured so as to interact with the input light entering the card through the window 131. The output light then forms an output color-coded pattern which depends on the light guide material 140 and on the particular light source. If the insert inlays 151 and 152 comprise a predefined light guide material 140 and the light source is visible ambient light, for example white light, then the output color-coded pattern may be characterized by a sequence of colors given by the colors of the two insert inlays 151 and 152, but having an increased brightness. If the insert inlays 151 and 152 comprise a predefined light guide material 140 and the light source is a monochromatic source with a predefined wavelength, then the output color-coded pattern may be characterized by a predefined sequence of colors different than the colors of the two insert inlays 151 and 152. Preferably, the bottom layer of the pre-form comprises a reflecting layer to prevent loss of radiation from the bottom of the card.

The monochromatic source may be a light source emitting at a predefined wavelength, for instance a monochromatic laser, or it may be a monochromatic light source obtained with a light filter. Furthermore, the monochromatic source may be polarized or unpolarized depending on the predefined light guide material.

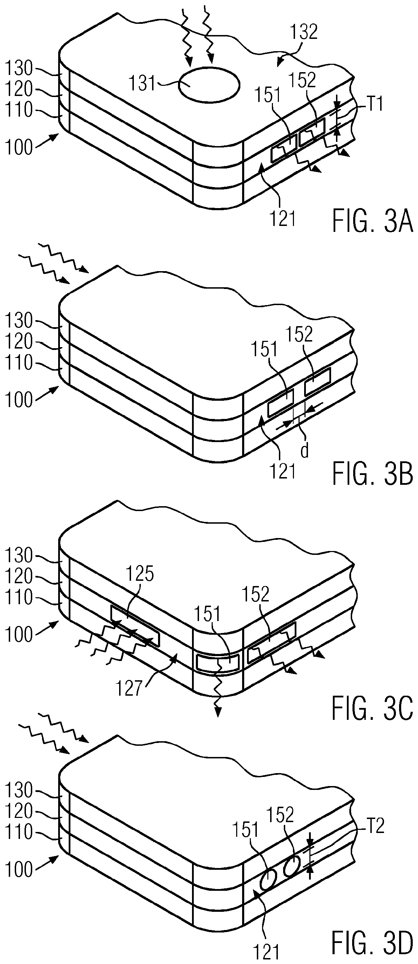

Figs. 3A to 3D schematically illustrate the pre-form 100 according to illustrative embodiments of the present invention, defining different color-coded patterns.

Fig. 3A represents a pre-form 100, according to the present invention, comprising a bottom layer 110, a central layer 120 and a top layer 130. A window 131 is placed on the upper surface 132 of the top layer 130 of the pre-form 100. Input light can enter the pre-form passing through the window 131. The window 131 is shown to have a round shape; however, it is clear that it can have any shape, i.e. a squared shape or a rectangular shape.

The pre-form is designed so that input light entering the window 131 passes through the light guide material 140 inserted within the central layer 120 and exists through the insert inlays 151 and 152. The two insert inlays 151 and 152 are represented to be at such a distance that they have a side in common. However, it is clear that they can be placed at any preferred reciprocal distance. Moreover, the two insert inlays 151 and 152 are shown to have the same thickness T1, but they could have different thicknesses. Furthermore, the two insert inlays 151 and 152 are shown to have the same thickness T1 as the total thickness of the central layer 120, but they could also have a thickness T1 smaller than the total thickness of the central layer 120.

Figure 3B schematically illustrates another embodiment of the present invention, representing a pre-form for a security document 100 comprising a bottom layer 110, a central layer 120 comprising a window and a top layer 130. In this configuration, the input light can enter the pre-form for a security document 100 through a window (not shown) placed on a side of the card, in particular on the opposite side with respect to the side 121 where the two insert inlays 151 and 152 are positioned. The input light travels through the pre-form 100 from side to side and exits from the side 121 of the central layer 120, where the translucent insert inlays 151 and 152 are positioned.

The two insert inlays 151 and 152 are represented to be spaced by a distance d between themselves. However, it is clear that they can be placed at any preferred reciprocal distance and they could be also put in contact to each other. Moreover, any thickness of the two insert inlays 151 and 152 would be possible.

Fig. 3C schematically illustrates a pre-form 100 according to an embodiment of the present invention, comprising a bottom layer 110, a central layer 120 comprising a window 125 and a top layer 130. The window 125 is placed on a side of the central layer 120 of the pre-form 100, in particular on the side 127 adjacent to the side 121 where the two insert inlays 151 and 152 are placed. In this configuration, input light enters the pre-form 100 through the window 125, passes through the light guide material 140 and exits through the two insert inlays 151 and 152. In this way, it is clear that, in operating conditions, the user can turn the pre-form 100 so as to simultaneously see the input light entering the pre-form 100 through the window 125 and the output light exiting the pre-form 100 through the two insert inlays 151 and 152.

The two insert inlays 151 and 152 are represented to be one next to the other and also to be in contact with the window 125. However, it is clear that the two insert inlays 151 and 152 and the window 125 can be placed at any preferred reciprocal distance. Moreover, any thickness of the two insert inlays 151 and 152 and of the window 125 would be possible.

Fig 3D schematically illustrates a pre-form 100 according to a preferred embodiment of the present invention. The pre-form 100 comprises a bottom layer 110, a central layer 120 comprising a window and a top layer 130, and the input light window (not shown) is placed on a side of the central layer 120, in particular on the opposite side with respect to the side 121 where the insert inlays 151 and 152 are placed. The insert inlays 151 and 152 are shown to have a circular shape. This configuration may be advantageously employed in combination with optical fibers as a light guide material 140, wherein the diameter of the insert inlays 151, 152 is equal to the diameter of the optical fibers and corresponds to the total thickness T2 of the central layer 120, so as to prevent energy loss. In this configuration, optical fibers connect one side 121 of the pre-form 100 to the opposite side and they transfer input light with a minimum loss of radiation.

The security documents, for example smart cards, comprising the pre-forms 100 according to the illustrative embodiments shown in Figs. 3A to 3D are exposed, in operating conditions, to a light source, for instance a visible ambient light source or a monochromatic light source. The light emission pattern formed on the side 121 where the two insert inlays 151 and 152 are positioned is detected by visual inspection by the user.

When an ambient light source is employed, the light emission pattern may be characterized by a sequence of colors which depends on the sequence of colors of the two insert inlays 151 and 152 and by an increased brightness. The user can hence recognize an increased brightness in the output color-coded pattern and be assured that the security document is genuine.

When a predefined monochromatic light source is employed, the light emission pattern may be characterized by a predefined sequence of colors different from the color-coded sequence of the two insert inlays 151 and 152. By detecting the output color-coded pattern and by knowing the expected predefined color-coded pattern, the user is able to immediately recognize counterfeiting by visual inspection.

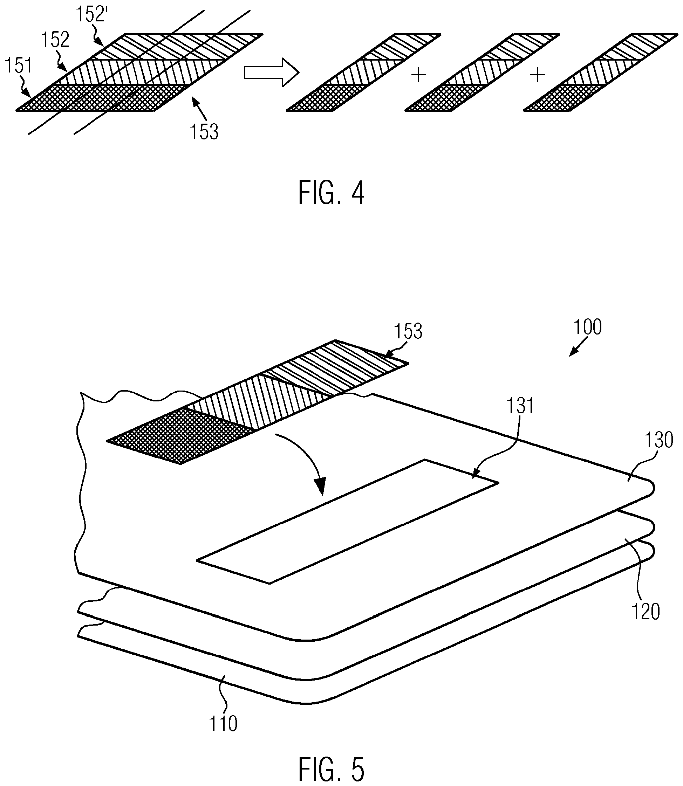

Fig. 4 schematically illustrates the process for forming a light guide material unit to be inserted inside the pre-form for a security document 100. The light guide material unit may be made by assembling together three cut-out portions 151, 152 and 152' of three corresponding light guide materials, for instance materials having different colors. The three portions 151, 152 and 152' can be laminated together so as to form a single light guide material sheet 153. The light guide material sheet 153 is then cut into different sections having pre-determined dimensions. For instance, each section of the light guide material sheet 153 may have the same dimensions as the window of the pre-form for a security document 100, so as to facilitate insertion. Punching tools are preferably employed to cut the light guide material sheet 153 into pre-determined portions.

It is clear that, even if three cut-out portions of light guide materials are represented, any number of cut-out portions of light guide materials is possible, for example one, two, four, five or more cut-out portions of light guide materials. If a single cut-out portion of light material is inserted into the pre-form for a security document 100, it is preferably cut so as to have the same dimensions as the window of the pre-form for a security document 100, so as to facilitate insertion.

The method for producing a pre-form for a security document 100 according to an embodiment of the present invention is described with reference to Fig. 5.

The pre-form for a security document 100 may be initially prepared in a standard way, by assembling together the first two layers, i.e. the bottom layer 110 and the central layer 120. In case a smartcard is required, an electronic chip is also inserted into the pre-form, for example in the central layer 120. Preferably, functional tests are performed to assure the correct functioning of the chip.

A cut-out portion of the light guide material sheet 153 is formed as described with reference to Fig. 4. Preferably, the cut-out portion of the light guide material sheet 153 is formed so as to have the same shape as the window 131 of the top layer 130 of the pre-form 100. Accordingly, the top layer 130 of the pre-form 100 is prepared so as to have a window 131 cut on the upper surface 131. However, it is clear that the cut-out portion of the light guide material sheet may also have the same shape as the window of the central layer 120 of the pre-form. In this case, the central layer 120 of the pre-form 100 is prepared so as to have a window 125 cut on any of its sides.

In the embodiment described with reference to Fig.5, top layer 130 including the window 131 is assembled to the previously assembled bottom layer 110 and central layer 120. The cut-out portion of the light guide material sheet 153 is inserted into the pre-form through the window 131 on the upper surface of the top layer 130, so as to be placed in the desired position. It is thus evident that, if the window is cut on one side of the central layer 120, the cut-out portion of the light guide material sheet 153 is inserted through that window so as to reach the predefined position in the central layer 120.

Once all the layers have been assembled, they are laminated together to form a monolithic block. Preferably, functional tests are performed to check the correct assembly of the pre-form. If a pre-form for a smart card is produced, functional tests are then preferably performed to confirm the correct functioning of the chip.

While the invention has been described with respect to the preferred physical embodiments constructed in accordance therewith, it will be apparent to those skilled in the art that various modifications, variations and improvements of the present invention may be made in the light of the above teachings and within the purview of the appended claims without departing from the intended scope of the invention.

For instance, even if it has been described that the window for letting the input light enter the pre-form for a security document is provided on the top layer, it is evident that it could be also made on the bottom layer, since there is no preferred orientation of the pre-form. For instance, even if preferred configurations of the insert inlays 151 and 152 are presented, it is clear that any color, position, shape and dimensions of the insert inlays 151 and 152 are possible and that, if two or more insert inlays are provided, they do not need to have the same shape nor dimensions.

For example, the two insert inlays 151 and 152 can have the same thickness as the total thickness of the central layer 120 of the pre-form 100, or they can have a thickness which is smaller than the total thickness of the central layer 120 of the pre-form 100. Moreover, the two insert inlays 151 and 152 can be placed at any predefined distance between each other, so as to create any required optical effect on the output color-coded pattern.

For example, it should be appreciated that the position of the two insert inlays 151 and 152 can be shifted with respect to the position of the input window 125 or 131, as long as the input light can reach the light guide material 140 without finding any obstacle and form the output color-coded pattern.

Even if it is not represented in the figures, it has to be understood that the position of the two insert inlays 151 and 152 can also be aligned with the input window 131 of the pre-form 100, when the window 131 is placed on the top layer 130 of the pre-form 100.

### LIST OF REFERENCE NUMBERS

100: pre-form for a security document
110: bottom layer
120: central layer
121: first side of the central layer
122: first corner of the first side
123: second corner of the first side
125: window on the central layer
126: second side of the central layer
127: third side of the central layer
130: top layer
131: window on the top layer
132: upper surface of the top layer
140: light guide material
150: color-coded pattern
151, 152, 152': insert inlays
153: multi-colored light guide material sheet
200: security document
210: card-body of a smartcard
220: chip for a smartcard

## Claims

1. A pre-form for a security document (100) comprising at least a bottom layer (110), a central layer (120) and a top layer (130),
**characterized in that:**
said central layer (120) comprises one or more insert inlays (151, 152) disposed between a first corner (122) and a second corner (123) of a first side (121) of said central layer (120) so as to form a color-coded pattern (150) along a direction extending between said first corner (122) and said second corner (123),
wherein said one or more insert inlays (151, 152) comprise a light guide material (140) that is configured to interact with input light entering through at least one window (125, 131) of said pre-form (100) and exiting from said one or more insert inlays (151, 152), so that said color-coded pattern (150) is modified by the interaction between a predefined input light and said light guide material (140).

2. The pre-form for a security document (100) according to claim 1, wherein said light guide material (140) is configured to interact with visible ambient light in such a way that the brightness of said color-coded pattern (150) is enhanced after exposure to visible ambient light.

3. The pre-form for a security document (100) according to claim 1, wherein said light guide material (140) is configured to interact with a predefined input light having a predefined wavelength or a predefined polarization, in such a way that the output color-coded pattern (150) resulting from exposure to said predefined input light is different from the color-coded pattern (150) resulting from exposure to visible ambient light.

4. The pre-form for a security document (100) according to any of previous claims, wherein said light guide material (140) comprises optical fibers.

5. The pre-form for a security document (100) according to any of previous claims 1 to 4, wherein said window (131) is placed on the upper surface (132) of said top layer (130) and said window (131) is configured so that said input light can enter said pre-form for a security document (100) and reach said light guide material (140).

6. The pre-form for a security document (100) according to any of previous claims 1 to 4, wherein said window (125) is placed on at least one side (126, 127) of said central layer (120) and said window (125) is configured so that said input light can enter said pre-form for a security document (100) and reach said light guide material (140).

7. The pre-form for a security document (100) according to claim 6, wherein said window (125) is placed on the opposite side (126) of said central layer (120) with respect to said first side (121).

8. The pre-form for a security document (100) according to claim 6, wherein said window (125) is placed on an adjacent side (127) of said central layer (120) with respect to said first side (121).

9. The pre-form for a security document (100) according to any of previous claims, wherein one or more of said one or more insert inlays (151, 152) has a thickness (T1) equal to or smaller than the total thickness (T2) of said central layer (120).

10. A security document (200) comprising a pre-form for a security document (100) according to any of previous claims 1 to 9.

11. The security document (200) according to claim 10, wherein said central layer (120) of said pre-form further comprises a chip (220) and said security document (200) is a smart card.

12. A method for producing a pre-form for a security document (100) comprising providing a bottom layer (110), a central layer (120) and a top layer (130), and laminating together said bottom layer (110), said central layer (120) and said top layer (130) to form a pre-form for a security document (100),
**characterized in that**
said method further comprises the following steps:
a) providing at least one window (125, 131) on one or more of said bottom layer (110), said central layer (120) or said top layer (130);
b) providing one or more insert inlays (151, 152) and disposing them between a first corner (122) and a second corner (123) of a first side (121) of said central layer (120), so as to form a color-coded pattern (150) along a direction extending between said first corner (122) and said second corner (123),
wherein said one or more insert inlays (151, 152) comprise a light guide material (140) configured to interact with input light entering through said window (125, 131) and exiting from said one or more inserts (151, 152), so that said color-coded pattern (150) is modified by the interaction between a predefined input light and said light guide material (140).

13. The method for producing a pre-form for a security document (100) according to claim 12, wherein said one or more insert inlays (151, 152) are formed from a corresponding cut-out portion of a light guide material (140).

14. The method for producing a pre-form for a security document (100) according to claims 12 or 13, wherein said one or more insert inlays (151, 152) comprise a single insert inlay and said single insert inlay is cut so as to have the same shape as said window (125, 131) and it is inserted into said pre-form through said window (125, 131).

15. The method for producing a pre-form for a security document (100) according to any of claims 12 or 13, wherein there are two or more insert inlays (151, 152) which are combined together to form a multi-colored light guide material sheet (153) comprising a horizontal color-coded pattern (150), and said multi-colored light guide material sheet (153) is cut so as to have a predefined shape.

16. The method for producing a pre-form for a security document (100) according to claim 15, wherein said multi-colored light guide material sheet (153) is cut so as to have the same shape as said window (125, 131) and is inserted into said pre-form through said window (125, 131).

17. The method for producing a pre-form for a security document (100) according to any of claims 15 or 16 or 17, wherein said multi-colored light guide material sheet (153) is formed by heat laminating together said insert inlays (151, 152).

18. The method for producing a pre-form for a security document (100) according to any of claims 14 to 17, wherein said single insert inlay or said multi-colored light guide material sheet (153) is cut so as to have a thickness (T1) equal to or smaller than the thickness (T2) of said central layer (120).

19. A method for operating a security document (200) according to any of claims 10 or 11, said method comprising the following steps:
a) exposing said security document (200) to a light source so that said window (125, 131) receives said predefined input light;
b) detecting the resulting color-coded pattern (150); and
c) comparing said resulting color-coded pattern (150) with a reference color-coded pattern to prove authenticity of said security document (200).

20. A method for operating a security document (200) according to claim 19, wherein said reference color-coded pattern has the same sequence of colors as said color-coded pattern (150) but it has superior brightness.

21. A method for operating a security document (200) according to claim 19, wherein said reference color-coded pattern has a predefined sequence of colors, which is different from the sequence of colors of said color-coded pattern (150).

## Patentansprüche

1. Vorform für ein Sicherheitsdokument (100), umfassend mindestens eine untere Schicht (110), eine mittlere Schicht (120) und eine obere Schicht (130),
**dadurch gekennzeichnet, dass**:
die mittlere Schicht (120) eine oder mehrere Einsatzeinlagen (151, 152) umfasst, die zwischen einer ersten Ecke (122) und einer zweiten Ecke (123) einer ersten Seite (121) der mittleren Schicht (120) angeordnet sind, um ein farbkodiertes Muster (150) entlang einer Richtung zu bilden, die sich zwischen der ersten Ecke (122) und der zweiten Ecke (123) erstreckt,
wobei das eine oder die mehreren Einsatzeinlagen (151, 152) ein Lichtleitermaterial (140) umfassen, das dazu konfiguriert ist, mit Eingangslicht zu interagieren, das durch mindestens ein Fenster (125, 131) der Vorform (100) eintritt und aus den einen oder mehreren Einsatzeinlagen (151, 152) austritt, so dass das farbkodierte Muster (150) durch die Interaktion zwischen einem vordefinierten Eingangslicht und dem Lichtleitermaterial (140) modifiziert wird.

2. Vorform für ein Sicherheitsdokument (100) nach Anspruch 1, wobei das Lichtleitermaterial (140) dazu konfiguriert ist, mit sichtbarem Umgebungslicht so zu interagieren, dass die Helligkeit des farbkodierten Musters (150) nach der Belichtung mit sichtbarem Umgebungslicht verstärkt wird.

3. Vorform für ein Sicherheitsdokument (100) nach Anspruch 1, wobei das Lichtleitermaterial (140) dazu konfiguriert ist, mit einem vordefinierten Eingangslicht mit einer vordefinierten Wellenlänge oder einer vordefinierten Polarisation derart zu interagieren, dass das ausgegebene farbkodierte Muster (150), das sich aus der Belichtung mit dem vordefinierten Eingangslicht ergibt, sich von dem farbkodierten Muster (150) unterscheidet, das sich aus der Belichtung mit sichtbarem Umgebungslicht ergibt.

4. Vorform für ein Sicherheitsdokument (100) nach einem der vorhergehenden Ansprüche, wobei das Lichtleitermaterial (140) optische Fasern umfasst.

5. Vorform für ein Sicherheitsdokument (100) nach einem der vorhergehenden Ansprüche 1 bis 4, wobei das Fenster (131) auf der oberen Oberfläche (132) der oberen Schicht (130) angeordnet ist und das Fenster (131) so konfiguriert ist, dass das Eingangslicht in die Vorform für ein Sicherheitsdokument (100) eintreten und das Lichtleitermaterial (140) erreichen kann.

6. Vorform für ein Sicherheitsdokument (100) nach einem der vorhergehenden Ansprüche 1 bis 4, wobei das Fenster (125) auf mindestens einer Seite (126, 127) der mittleren Schicht (120) angeordnet ist und das Fenster (125) so konfiguriert ist, dass das Eingangslicht in die Vorform für ein Sicherheitsdokument (100) eintreten und das Lichtleitermaterial (140) erreichen kann.

7. Vorform für ein Sicherheitsdokument (100) nach Anspruch 6, wobei das Fenster (125) auf der gegenüberliegenden Seite (126) der mittleren Schicht (120) in Bezug auf die erste Seite (121) angeordnet ist.

8. Vorform für ein Sicherheitsdokument (100) nach Anspruch 6, wobei das Fenster (125) auf einer an die mittlere Schicht (120) angrenzenden Seite (127) in Bezug auf die erste Seite (121) angeordnet ist.

9. Vorform für ein Sicherheitsdokument (100) nach einem der vorhergehenden Ansprüche, wobei eine oder mehrere der einen oder mehreren Einsatzeinlagen (151, 152) eine Dicke (T1) haben, die gleich oder kleiner ist als die Gesamtdicke (T2) der mittleren Schicht (120).

10. Sicherheitsdokument (200), umfassend eine Vorform für ein Sicherheitsdokument (100) nach einem der vorhergehenden Ansprüche 1 bis 9.

11. Sicherheitsdokument (200) nach Anspruch 10, wobei die mittlere Schicht (120) der Vorform des Weiteren einen Chip (220) umfasst und das Sicherheitsdokument (200) eine Chipkarte ist.

12. Verfahren zur Herstellung einer Vorform für ein Sicherheitsdokument (100), umfassend das Bereitstellen einer unteren Schicht (110), einer mittleren Schicht (120) und einer oberen Schicht (130) und das Zusammenlaminieren der unteren Schicht (110), der mittleren Schicht (120) und der oberen Schicht (130) zur Bildung einer Vorform für ein Sicherheitsdokument (100),
**dadurch gekennzeichnet, dass**
das Verfahren außerdem die folgenden Schritte umfasst:
a) Bereitstellen mindestens eines Fensters (125, 131) auf einer oder mehreren der unteren Schicht (110), der mittleren Schicht (120) oder der oberen Schicht (130);
b) Bereitstellen einer oder mehrerer Einsatzeinlagen (151, 152) und Anordnen derselben zwischen einer ersten Ecke (122) und einer zweiten Ecke (123) einer ersten Seite (121) der mittleren Schicht (120), um ein farbkodiertes Muster (150) entlang einer Richtung zu bilden, die sich zwischen der ersten Ecke (122) und der zweiten Ecke (123) erstreckt,
wobei die einen oder mehreren Einsatzeinlagen (151, 152) ein Lichtleitermaterial (140) umfassen, das dazu konfiguriert ist, mit Eingangslicht zu interagieren, das durch das Fenster (125, 131) eintritt und aus den einen oder mehreren Einsatzeinlagen (151, 152) austritt, so dass das farbkodierte Muster (150) durch die Interaktion zwischen einem vordefinierten Eingangslicht und dem Lichtleitermaterial (140) modifiziert wird.

13. Verfahren zur Herstellung einer Vorform für ein Sicherheitsdokument (100) nach Anspruch 12, wobei die einen oder mehreren Einsatzeinlagen (151, 152) aus einem entsprechenden ausgeschnittenen Abschnitt eines Lichtleitermaterials (140) gebildet werden.

14. Verfahren zur Herstellung einer Vorform für ein Sicherheitsdokument (100) nach Anspruch 12 oder 13, wobei die einen oder mehreren Einsatzeinlagen (151, 152) eine einzelne Einsatzeinlage umfassen und die einzelne Einsatzeinlage so geschnitten wird, dass sie die gleiche Form wie das Fenster (125, 131) hat, und durch das Fenster (125, 131) in die Vorform eingesetzt wird.

15. Verfahren zur Herstellung einer Vorform für ein Sicherheitsdokument (100) nach einem der Ansprüche 12 oder 13, wobei zwei oder mehr Einsatzeinlagen (151, 152) vorhanden sind, die miteinander kombiniert werden, um ein mehrfarbiges Lichtleitermaterialblatt (153) zu bilden, das ein horizontales farbkodiertes Muster (150) umfasst, und das mehrfarbige Lichtleitermaterialblatt (153) so geschnitten wird, dass es eine vordefinierte Form aufweist.

16. Verfahren zur Herstellung einer Vorform für ein Sicherheitsdokument (100) nach Anspruch 15, wobei das mehrfarbige Lichtleitermaterialblatt (153) so geschnitten wird, dass es die gleiche Form wie das Fenster (125, 131) hat, und durch das Fenster (125, 131) in die Vorform eingesetzt wird.

17. Verfahren zur Herstellung einer Vorform für ein Sicherheitsdokument (100) nach einem der Ansprüche 15, 16 oder 17, wobei das mehrfarbige Lichtleitermaterialblatt (153) durch Heißlaminieren der Einsatzeinlagen (151, 152) gebildet wird.

18. Verfahren zur Herstellung einer Vorform für ein Sicherheitsdokument (100) nach einem der Ansprüche 14 bis 17, wobei die einzelne Einsatzeinlage oder das mehrfarbige Lichtleitermaterialblatt (153) so geschnitten wird, dass es eine Dicke (T1) hat, die gleich oder kleiner als die Dicke (T2) der mittleren Schicht (120) ist.

19. Verfahren zum Betreiben eines Sicherheitsdokuments (200) nach einem der Ansprüche 10 oder 11, wobei das Verfahren die folgenden Schritte umfasst:
a) Belichten des Sicherheitsdokuments (200) mit einer Lichtquelle, so dass das Fenster (125, 131) das vordefinierte Eingangslicht empfängt;
b) Erfassen des resultierenden farbkodierten Musters (150); und
c) Vergleichen des sich ergebenden farbkodierten Musters (150) mit einem farbkodierten Referenzmuster zum Nachweis der Echtheit des Sicherheitsdokuments (200).

20. Verfahren zum Betreiben eines Sicherheitsdokuments (200) nach Anspruch 19, wobei das farbkodierte Referenzmuster die gleiche Farbfolge wie das farbkodierte Muster (150) hat, aber eine höhere Helligkeit aufweist.

21. Verfahren zum Betreiben eines Sicherheitsdokuments (200) nach Anspruch 19, wobei das farbkodierte Referenzmuster eine vordefinierte Abfolge von Farben aufweist, die sich von der Abfolge der Farben des farbkodierten Musters (150) unterscheidet.

## Revendications

1. Préforme pour un document de sécurité (100) comprenant au moins une couche inférieure (110), une couche centrale (120) et une couche supérieure (130),
**caractérisée en ce que** :
ladite couche centrale (120) comprend une ou plusieurs incrustations d'insert (151, 152) disposées entre un premier coin (122) et un deuxième coin (123) d'un premier côté (121) de ladite couche centrale (120) de manière à former un motif codé par couleur (150) le long d'une direction s'étendant entre ledit premier coin (122) et ledit deuxième coin (123),
dans laquelle ladite ou lesdites plusieurs incrustations d'insert (151, 152) comprennent un matériau de guidage de lumière (140) qui est configuré pour interagir avec la lumière d'entrée pénétrant à travers au moins une fenêtre (125, 131) de ladite préforme (100) et sortant de ladite ou desdites plusieurs incrustations d'insert (151, 152), de sorte que ledit motif codé par couleur (150) soit modifié par l'interaction entre une lumière d'entrée prédéfinie et ledit matériau de guidage de lumière (140).

2. Préforme pour un document de sécurité (100) selon la revendication 1, dans laquelle ledit matériau de guidage de lumière (140) est configuré pour interagir avec la lumière ambiante visible de manière à ce que la luminosité dudit motif codé par couleur (150) soit renforcée après exposition à la lumière ambiante visible.

3. Préforme pour un document de sécurité (100) selon la revendication 1, dans laquelle ledit matériau de guidage de lumière (140) est configuré pour interagir avec une lumière d'entrée prédéfinie ayant une longueur d'onde prédéfinie ou une polarisation prédéfinie, de manière à ce que le motif codé par couleur de sortie (150) résultant de l'exposition à ladite lumière d'entrée prédéfinie soit différent du motif codé par couleur (150) résultant de l'exposition à la lumière ambiante visible.

4. Préforme pour un document de sécurité (100) selon l'une des revendications précédentes, dans laquelle ledit matériau de guidage de lumière (140) comprend des fibres optiques.

5. Préforme pour un document de sécurité (100) selon l'une des revendications précédentes 1 à 4, dans laquelle ladite fenêtre (131) est placée sur la surface supérieure (132) de ladite couche supérieure (130) et ladite fenêtre (131) est configurée de sorte que ladite lumière d'entrée puisse pénétrer dans ladite préforme pour un document de sécurité (100) et atteindre ledit matériau de guidage de lumière (140).

6. Préforme pour un document de sécurité (100) selon l'une des revendications précédentes 1 à 4, dans laquelle ladite fenêtre (125) est placée sur au moins un côté (126, 127) de ladite couche centrale (120) et ladite la fenêtre (125) est configurée de sorte que ladite lumière d'entrée puisse pénétrer dans ladite préforme pour un document de sécurité (100) et atteindre ledit matériau de guidage de lumière (140).

7. Préforme pour un document de sécurité (100) selon la revendication 6, dans laquelle ladite fenêtre (125) est placée sur le côté opposé (126) de ladite couche centrale (120) par rapport audit premier côté (121).

8. Préforme pour un document de sécurité (100) selon la revendication 6, dans laquelle ladite fenêtre (125) est placée sur un côté adjacent (127) de ladite couche centrale (120) par rapport audit premier côté (121).

9. Préforme pour un document de sécurité (100) selon l'une des revendications précédentes, dans laquelle une ou plusieurs incrustations de ladite ou desdites plusieurs incrustations d'insert (151, 152) a une épaisseur (T1) inférieure ou égale à l'épaisseur totale (T2) de ladite couche centrale (120).

10. Document de sécurité (200) comprenant une préforme pour un document de sécurité (100) selon l'une des revendications précédentes 1 à 9.

11. Document de sécurité (200) selon la revendication 10, dans lequel ladite couche centrale (120) de ladite préforme comprend en outre une puce (220) et ledit document de sécurité (200) est une carte à puce.

12. Procédé de production d'une préforme pour un document de sécurité (100) comprenant la fourniture d'une couche inférieure (110), d'une couche centrale (120) et d'une couche supérieure (130), et la stratification ensemble de ladite couche inférieure (110), de ladite couche centrale (120) et de ladite couche supérieure (130) pour former une préforme pour un document de sécurité (100),
**caractérisé en ce que**
ledit procédé comprend en outre les étapes suivantes :
a) fournir au moins une fenêtre (125, 131) sur une ou plusieurs de ladite couche inférieure (110), de ladite couche centrale (120) ou de ladite couche supérieure (130) ;
b) fournir une ou plusieurs incrustations d'insert (151, 152) et les disposer entre un premier coin (122) et un deuxième coin (123) d'un premier côté (121) de ladite couche centrale (120), de manière à former un motif codé par couleur (150) le long d'une direction s'étendant entre ledit premier coin (122) et ledit deuxième coin (123),
dans lequel ladite ou lesdites plusieurs incrustations d'insert (151, 152) comprennent un matériau de guidage de lumière (140) configuré pour interagir avec la lumière d'entrée pénétrant à travers ladite fenêtre (125, 131) et sortant de ladite ou desdites une ou plusieurs incrustations d'insert (151, 152), de sorte que ledit motif codé par couleur (150) soit modifié par l'interaction entre une lumière d'entrée prédéfinie et ledit matériau de guidage de lumière (140).

13. Procédé de production d'une préforme pour un document de sécurité (100) selon la revendication 12, dans lequel ladite ou lesdites plusieurs incrustations d'insert (151, 152) sont formées à partir d'une partie découpée correspondante d'un matériau de guidage de lumière (140).

14. Procédé de production d'une préforme pour un document de sécurité (100) selon les revendications 12 ou 13, dans lequel ladite ou lesdites plusieurs incrustations d'insert (151, 152) comprennent une incrustation d'insert unique et ladite incrustation d'insert unique est découpée de manière à avoir la même forme que ladite fenêtre (125, 131) et elle est insérée dans ladite préforme à travers ladite fenêtre (125, 131).

15. Procédé de production d'une préforme pour un document de sécurité (100) selon l'une des revendications 12 ou 13, dans lequel il y a deux incrustations d'insert (151, 152) ou plus qui sont combinées ensemble pour former une feuille de matériau de guidage de lumière multicolore (153) comprenant un motif horizontal codé par couleur (150), et ladite feuille de matériau de guidage de lumière multicolore (153) est découpée de manière à avoir une forme prédéfinie.

16. Procédé de production d'une préforme pour un document de sécurité (100) selon la revendication 15, dans lequel ladite feuille de matériau de guidage de lumière multicolore (153) est découpée de manière à avoir la même forme que ladite fenêtre (125, 131) et est insérée dans ladite préforme à travers ladite fenêtre (125, 131).

17. Procédé de production d'une préforme pour un document de sécurité (100) selon l'une des revendications 15, 16 ou 17, dans lequel ladite feuille de matériau de guidage de lumière multicolore (153) est formée par stratification thermique ensemble desdites incrustations d'insert (151, 152).

18. Procédé de production d'une préforme pour un document de sécurité (100) selon l'une des revendications 14 à 17, dans lequel ladite incrustation d'insert unique ou ladite feuille de matériau de guidage de lumière multicolore (153) est découpée de manière à avoir une épaisseur (T1) inférieure ou égale à l'épaisseur (T2) de ladite couche centrale (120).

19. Procédé d'exploitation d'un document de sécurité (200) selon l'une des revendications 10 ou 11, ledit procédé comprenant les étapes suivantes :
a) exposer ledit document de sécurité (200) à une source de lumière de sorte que ladite fenêtre (125, 131) reçoive ladite lumière d'entrée prédéfinie ;
b) détecter le motif codé par couleur résultant (150) ; et
c) comparer ledit motif codé par couleur résultant (150) avec un motif codé par couleur de référence pour prouver l'authenticité dudit document de sécurité (200).

20. Procédé d'exploitation d'un document de sécurité (200) selon la revendication 19, dans lequel ledit motif codé par couleur de référence a la même séquence de couleurs que ledit motif codé par couleur (150) mais il a une luminosité supérieure.

21. Procédé d'exploitation d'un document de sécurité (200) selon la revendication 19, dans lequel ledit motif codé par couleur de référence a une séquence de couleurs prédéfinie, qui est différente de la séquence de couleurs dudit motif codé par couleur (150).
